Europäisches Patentamt

European Patent Office

Office européen des brevets

(19)

(11) Numéro de publication: **0 001 532**
**B1**

(12) **FASCICULE DE BREVET EUROPEEN**

(45) Date de publication du fascicule du brevet: **14.04.82**

(51) Int. Cl.³: **G 01 S 15/89,** G 03 H 3/00
//A61B10/00

(21) Numéro de dépôt: **78400126.5**

(22) Date de dépôt: **03.10.78**

(54) **Système de visualisation par ultra-sons d'une coupe mince d'un corps.**

(30) Priorité: **07.10.77 FR 7730245**

(43) Date de publication de la demande:
**18.04.79 Bulletin 79/8**

(45) Mention de la délivrance du brevet:
**14.04.82 Bulletin 82/15**

(84) Etats contractants désignés:
**BE DE GB NL**

(56) Documents cités:
**FR - A - 2 287 205**
**FR - A - 2 367 289**
**US - A - 3 899 767**

(73) Titulaire: **THOMSON-CSF**
**173, Boulevard Haussmann**
**F-75360 Paris Cedex 08 (FR)**

(72) Inventeur: **Hartemann, Pierre**
**"THOMSON-CSF" - SCPI 173 bld Haussmann**
**F-75360 Paris Cedex 08 (FR)**
Inventeur: **Torguet, Roger**
**"THOMSON-CSF" - SCPI 173, bld Haussmann**
**F-75360 Paris Cedex 08 (FR)**

(74) Mandataire: **Wang, Pierre et al,**
**"THOMSON-CSF" - SCPI 173, bld. Haussmann**
**F-75360 Paris Cedex 08 (FR)**

Courier Press, Leamington Spa, England.

Dispositif de visualisation par ultra-sons d'une coupe mince d'un corps

La présente invention se rapporte aux dispositifs de visualisation par ultra-sons qui permettent de former l'image d'une coupe mince d'un corps. Cette technique se fonde sur la directivité des faisceaux d'ondes ultra-sonores, sur les réflexions subies à chaque changement d'impédance acoustique du milieu de propagation et sur l'évaluation des retards de transmission, ce qui permet de localiser avec précision les zones réfléchissantes.

Dans les dispositifs de visualisation par ultra-sons, on peut former une image visible en utilisant un faisceau lumineux cohérent traversant une cuve à ultra-sons dans laquelle le corps à examiner a été plongé. La diffraction Bragg du rayonnement lumineux par les fronts d'ondes ultrasonores qui émergent du corps insonifié, donne naissance à une image optique. Cette technique a été perfectionée en utilisant une sonde exploratrice multi-éléments qui évite de devoir plonger le corps à examiner dans une cuve. Un dispositif de ce genre est décrit dans la demande de brevet français déposée par la demanderesse, le 11 Octobre 1974 sous le N° 74.34304 et publiée sous le N° 2 287 205. Cependent, le principe de reconstruction d'une image visible par diffraction est d'une mise en oeuvre délicate, car il faut prévoir une source lumineuse cohérente associée à une cellule opto-acoustique reliée à la sonde et des moyens optiques d'analyse de l'image reconstruite permettant la visualisation sur l'écran de télévision d'une tranche du corps à examiner.

Il existe des dispositifs de visualisation par ultra-sons donnant une vision frontale d'un corps insonifié. Cette vision frontale est obtenue au moyen d'une lentille ultrasonore composée de plusieurs voies élémentaires, chacune composée d'un transducteur récepteur d'ultra-sons, d'un circuit changeur de fréquence et d'un transducteur réémetteur. La pupille d'entrée de la lentille ultrasonore regroupe les transducteurs récepteurs, afin de recueillir des rayonnements ultrasonores provenant de secteur de surveillance. La pupille de sortie de la lentille ultrasonore regroupe les transducteurs réémetteurs qui rayonnent des ondes de volume projetant dans l'espace l'image des sources ultrasonores contenues dans le secteur de surveillance. La vision frontale obtenue permet d'exciter un jeu de transducteurs qui analysent frontalement l'image dans un plan de détection situé à une certaine distance de la lentille ultrasonore. De tels dispositifs sont décrits dans le brevet américain délivré le 12 Août 1975 sous le N° 3,899,767. L'inconvénient de ces dispositifs est de fournir une image frontale où sont superposés les signaux ultrasonores provenant d'un secteur tridimensionnel.

En vue de pallier les inconvénients inhérents à cette technique, l'invention propose d'associer à la sonde exploratrice une barette de transducteurs à ondes de surface agencés sur un substrat de manière à constituer une lentille capable de former l'image ultrasonore de la coupe explorée par la sonde. L'image ultrasonore, ainsi produite est analysée par un réseau de transducteurs à ondes de surface dont les bornes de sortie sont reliées au moniteur de télévision qui fournit l'image de la coupe. Ainsi, les moyens optiques de reconstruction d'image par diffraction Bragg et les moyens d'analyse de l'image reconstruite sont remplacés par un dispositif à ondes élastiques de surface beaucoup moins coûteux et volumineux. Le fontionnement réversible de ce dispositif permet en outre d'utiliser la sonde exploratrice soit comme récepteur d'ultra-sons soit comme émetteur permettant une exploration par balayage angulaire avec un choix de plusieurs lignes de focalisation.

L'invention a pour objet un dispositif de visualisation par ultra-sons d'une coupe mince d'un corps, le dispositif comprenant des moyens d'insonification, composés d'un générateur électrique d'ultra-sons et d'au moins un transducteur électromécanique, et des moyens de visualisation, ledit dispositif comprenant en outre une lentille ultrasonore à changement de fréquence composée d'une première rangée de N transducteurs électromécaniques à ondes de volume formant une sonde exploratrice, d'un ensemble de N circuits électriques changeurs de fréquence reliés à un oscillateur local commun et d'une seconde rangée de N transducteurs électromécaniques; les première et seconde rangées ayant leurs transducteurs homologues interconnectés deux à deux par les circuits électriques changeurs de fréquence de manière à constituer un faisceau de transmission à N voies dans lesquelles circulent N signaux électriques; la fréquence des ondes de volume étant égale à l'écart entre la fréquence des signaux parcourant les transducteurs de ladite seconde rangée et celle du signal produit par l'oscillateur local; la seconde rangée de N transducteurs étant associée à au moins une troisième rangée de transducteurs électromécaniques dont l'image produite par ladite lentille ultrasonore assure l'analyse dudit corps par un échange d'énergie ultrasonore entre la troisième rangée et les moyens de visualisation, caractérisé en ce que les transducteurs desdites seconde et troisième rangées sont des transducteurs à ondes élastiques de surface agencés à la surface d'un substrat; ladite lentille ultrasonore conjuguant ladite coupe mince et ladite surface; ladite coupe mince et ladite première rangée étant coplanaires.

L'invention sera mieux comprise au moyen de la description qui va suivre et des figures annexées, parmi lesquelles:

— la figure 1 représente un système de visualisation selon l'invention;

— les figures 2, 3 et 4 sont des diagrammes explicatifs;

— la figure 5 représente une variante de réalisation de la lentille ultrasonore selon l'invention;

— la figure 6 représente une configuration de transducteurs à ondes de surface;

— la figure 7 est une figure explicative;

— la figure 8 représente de façon plus détaillée le système de la figure 1;

— la figure 9 représente un système de visualisation dans lequel la sonde exploratrice fonctionne en émetteur d'ultra-sons;

— la figure 10 représente une variante de réalisation du montage de la figure 9;

— la figure 11 est un diagramme explicatif.

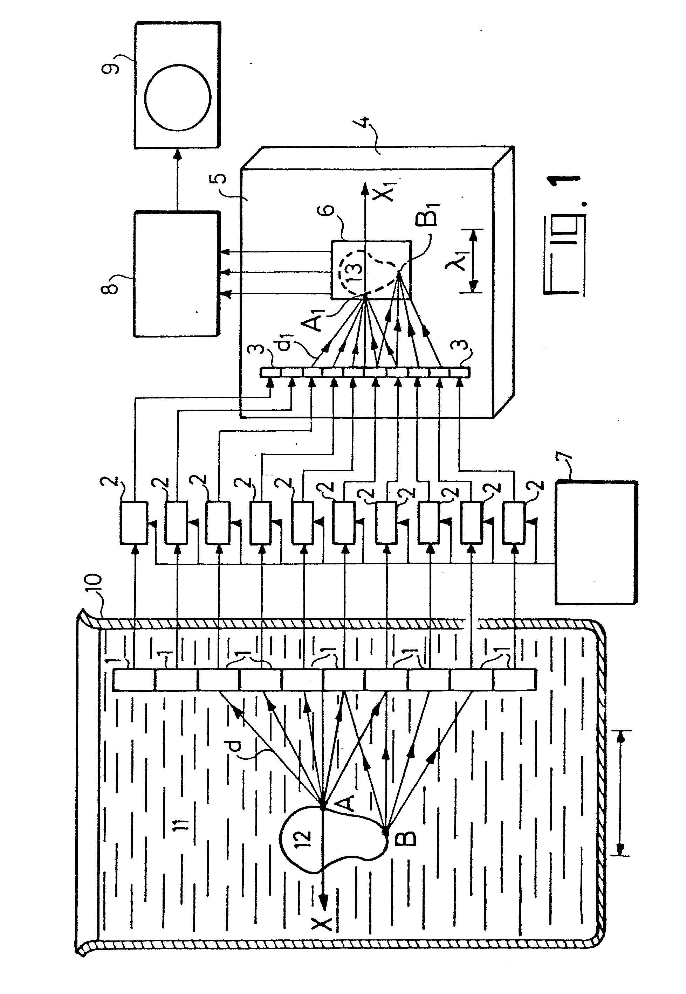

Sur la figure 1, on peut voir les éléments principaux d'un système de visualisation par ultra-sons selon l'invention. Ce système comporte une sonde exploratrice multi-éléments composée d'une rangée de transducteurs électromécaniques à ondes de volume 1. Pour illustrer un cas de fonctionnement facile à comprendre, on a représenté la sonde 1 dans une cuve 10 qui contient un liquide 11 dans lequel est immergé le corps 12 dont on désire visualiser la coupe. Dans une application médicale, le corps 12 serait un organe à examiner et le milieu 11 serait constitué par les tissus entourant l'organe 12; la sonde 1 serait simplement appliquée contre l'épiderme du patient afin de recueillir via les tissus perméables 11 les rayonnements ultrasonores provenant de l'organe 12. Pour simplifier la figure 1, on n'a pas représenté l'émetteur d'ultrasons utilisé pour réaliser l'insonification du corps. Dans une version échographique, l'insonification peut être réalisée en faisant émettre par la sonde 1 une impulsion ultrasonore de fréquence $F_1$. Grâce à la directivité des transducteurs 1, le rayonnement ultra-sonore émis est confiné dans un faisceau lamellaire orienté parallèlement au plan de la figure 1. En déplaçant la sonde 1 perpendiculairement au plan de la figure 1, il est possible de visualiser successivement plusieurs coupes du corps 12. Dans ce qui va suivre on peut faire l'hypothèse que les points A, B du corps 12 émettent continûment des ultra-sons de longueur d'onde $\lambda$. Ces ultra-sons sont matérialisés par des rayons d qui atteignent les transducteurs 1 de la sonde. Sur la figure 1, on a représenté une rangée rectiligne de N transducteurs 1 et l'axe X est la normale passant par le milieu de la rangée de transducteurs.

En vue d'obtenir l'effet de lentille évoqué ci-dessus, les N transducteurs 1 sont reliés par un ensemble de N circuits à changement de fréquence 2. Un oscillateur local 7 fonctionnant à la fréquence F est relié à chaque circuit changeur de fréquence 2. Les circuits 2 délivrent des signaux électriques ultrasonores à une fréquence $F_2$ correspondant à la différence entre les fréquences F et $F_1$; ces signaux changés de fréquence sont appliqués une rangée de N transducteurs électromécaniques à ondes de surface qui sont agencés à la surface 5 d'un substrat 4.

Comme les fréquences F et $F_2$ sont avantageusement supérieures à fréquence $F_1$ des ondes captées par la sonde exploratrice 1 et compte-tenu des vitesses de propagation respectives dans le milieu 11 et à la surface 5, on voit que la longueur d'onde $\lambda_1$ des ondes de surface est inférieure à $\lambda$.

Pour commencer, on peut supposer que la rangée 3 présente une configuration homothétique de celle de la rangée 1 avec le rapport d'homothétie

$$k = \frac{\lambda_1}{\lambda_2}.$$

Cette hypothèse n'est pas limitative comme on le verra par la suite. Sachant que seul le battement inférieur est transmis, c'est-à-dire que la fréquence de l'oscillateur local 7 est égale à la somme des fréquences $F_1$ et $F_2$, on conçoit qu'un déphasage $\phi$ existant entre les signaux délivrés par deux des transducteurs 1 est changé de signe lorsqu'on prend en considération les deux signaux changés de fréquence qui sont appliqués aux deux transducteurs homologues 3. Lorsqu'on considère le point A de l'objet comme émetteur ponctuel d'ultra-sons, les rayons qui aboutissent aux transducteurs 1 sont d'inégales longueurs. Il en résulte des déphasages $\phi$ entre les signaux délivrés par les transducteurs 1. Ceux-ci dépendent étroitement de la position occupée par le point A, de la longueur d'onde $\lambda$ et de la configuration de la sonde exploratrice 1. Pour un point B, d'autres déphasages seraient obtenus. Après changement de fréquence, on dispose des mêmes déphasages changés de signe. Il existe donc un point $A_1$ de la surface 5 où les ondes de surface vont former une image ultrasonore ponctuelle du point A. Il en est de même pour le point B qui est imagé en $B_1$. En fin de compte, il se forme dans la surface 5 une image ultrasonore 13 de la coupe de l'objet 12. Comme on a supposé que la rangée 3 est réduite dans le rapport k, l'image 13 est également réduite k fois par rapport à la coupe de l'objet 12. En conclusion, l'ensemble comprenant la rangée 1, les circuits 2 et 7 et la rangée 3 fonctionne à la manière d'une lentille. Conformément à l'invention, l'image ultrasonore 13 est captée par un ensemble 6 de transducteurs récepteurs dont la configuration détaillée sera donnée par la suite. Les signaux électriques délivrés par l'ensemble de détection 6 sont appliqués à un dispositif de visualisation 9 du genre récepteur de télévision. Compte-tenu du mode de visualisation sur l'écran du dispositif 9, un circuit de transmission 8 assure l'aiguillage des signaux détectés et leur distribution dans le temps. La normale $X_1$ passant par le milieu de la rangée 3 est l'image de l'axe X.

Les diagrammes des figures 2 à 4 permettent de mieux saisir les ressemblances et les différences qui existent entre la lentille ultra-sonore qui vient d'être décrite et une lentille optique classique.

On voit sur la figure 2 une lentille optique 14 taillée dans un milieu réfringent transparent. Cette lentille convergente d'axe optique 15 forme en I l'image de l'objet O et en $I_1$ l'image de l'objet $O_1$. On constate que plus l'objet est proche de la lentille, plus l'image s'en éloigne.

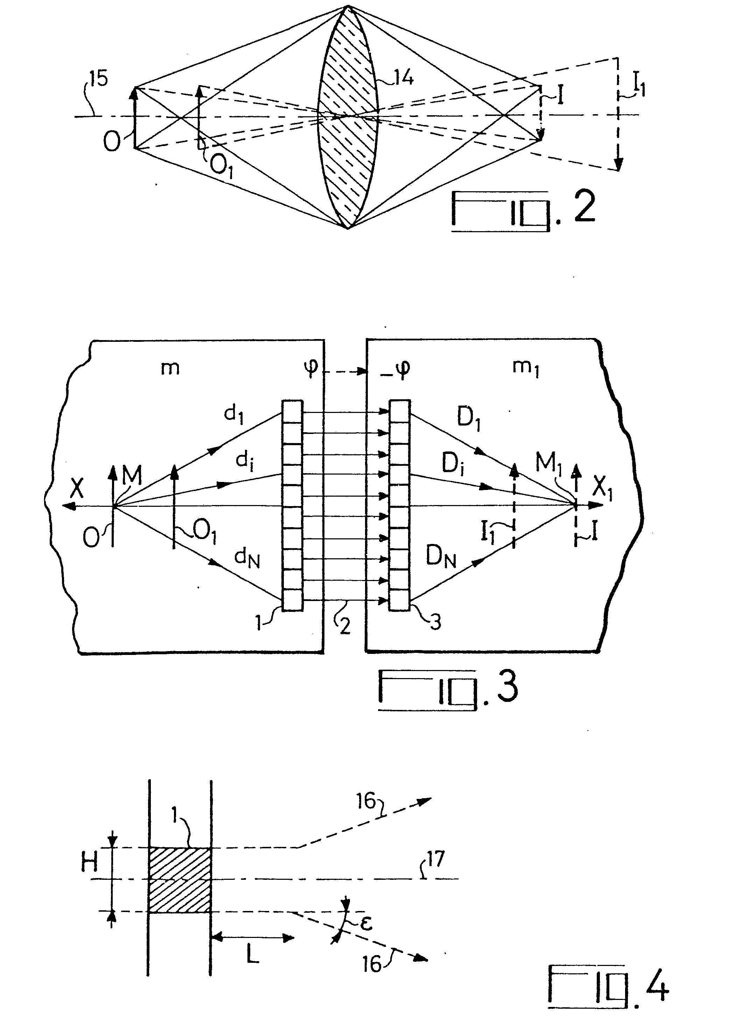

On voit sur la figure 3 une lentille ultra-sonore à changement de fréquence. Dans le milieu de propagation m se propagent des ondes de volume recueillies par la sonde multi-éléments 1. Un ensemble de voies de transmission 2 à changement de fréquence réalise un changement du signe de la phase des signaux appliqués à la rangée de transducteurs 3. La rangée de transducteurs 3 rayonne des ondes élastiques de surface dans le milieu $m_1$. L'objet O est imagé en I, car, du point M partent des rayons $d_1$ à $d_N$ qui sont focalisés sous la forme de rayons $D_1$ à $D_N$ se croisant au point $M_1$. En d'autres termes, des rayonnements isochrones émis du point M se retrouvent isochrones en $M_1$ grâce au changement de signe de la phase $\phi$. On constate qu'un objet $O_1$ placé plus près de la sonde 1 est imagé en $I_1$ également plus près de la rangée 3. Ceci montre que la notion de grandissement n'est pas la même qu'en optique. L'exemple de la figure 3 est celui d'un fonctionnement avec un grandissement unitaire. Dans ce cas, les longueurs d'ondes sont les mêmes dans les milieux m et $m_1$.

La lentille ultrasonore de la figure 3 est susceptible de fonctionner dans les deux sens. En particulier, les transducteurs à ondes de surface 3 peuvent recevoir du point $M_1$ une onde de surface et la sonde 1 émet alors un faisceau d'ondes de volume qui vient converger en M. Bien entendu, il faut que les circuits changeurs de fréquence fonctionnent dans le sens inverse.

La lentille ultrasonore présente par rapport à la lentille optique une différence qui tient à la directivité des transducteurs élémentaires constituant les rangées 1 et 3.

On voit sur la figure 4 qu'un transducteur 1 d'axe 17 et de hauteur H ne peut recueillir les ondes ultrasonores qu'à l'intérieur de contour 16. La partie cylindrique de ce contour a une longueur L égale à

$$\frac{H^2}{4\lambda}$$

et la partie conique présente un angle d'ouver-ture $\varepsilon$ égal à

$$\frac{\lambda}{H} \cdot$$

Ces valeurs correspondent au premier zéro de la figure de diffraction.

De ce fait, tous les transducteurs 1 ne coopèrent pas nécessairement à la formation de l'image d'un certain point objet.

Indépendamment de cette notion de directivité, le fait que certains transducteurs de la rangée ne participent pas à la formation de l'image d'un point peut résulter de la durée d'application de l'énergie ultrasonore.

Sur la figure 7, on peut voir une lentille ultra-sonore semblable à celle de la figure 3. L'énergie ultrasonore provenant du point M se présente sous la forme d'une impulsion C de durée T. L'énergie rerayonnée par la rangée 3 est formée d'impulsions décalées de $\Delta t$. Dans la plage hachurée, de décalage temporel $\Delta t$ n'excède pas la durée T de sorte que les transducteurs 1 et 3 qui couvrent la plage hachurée coopèrent lors de la focalisation de l'énergie ultrasonore issue du point M. Les autres transducteurs disponibles sont mis à contribution lors de la focalisation de l'énergie provenant de points situés en dehors de l'axe X.

Lorsque les configurations des rangées 1 et 3 sont les mêmes au rapport d'homothétie près, on obtient une focalisation avec un grandissement égal au rapport des longueurs d'ondes.

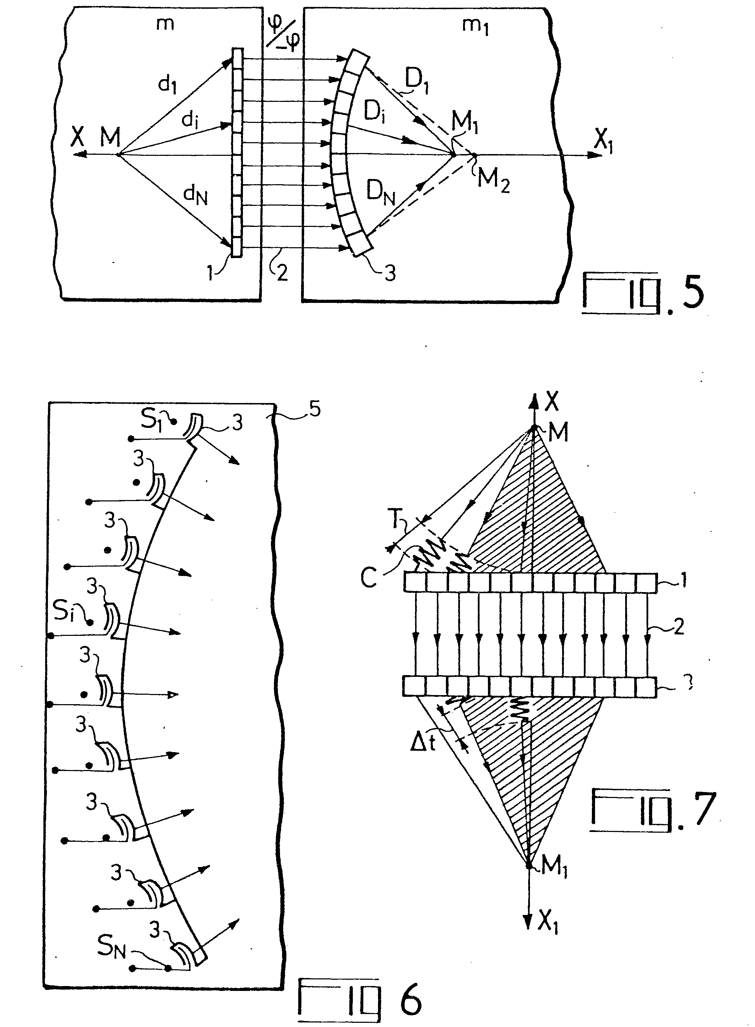

Cependant, comme le montre la figure 5, les configurations des rangées 1 et 3 peuvent différer l'une de l'autre. La sonde exploratrice 1 est constituée par exemple par une rangée rectiligne de transducteurs, mais la rangée 3 au lieu d'être rectiligne est incurvée. Si la rangée 3 était rectiligne l'image du point M se formerait en $M_2$. Cependant, l'incurvation de la rangée 3 provoque un déplacement de l'image qui se forme effectivement au point $M_1$. On constate que l'incurvation des rangées permet d'intéresser un plus grand nombre de transducteurs à la focalisation dans les cas où la directivité des transducteurs ou la durée des impulsions peuvent limiter ce nombre.

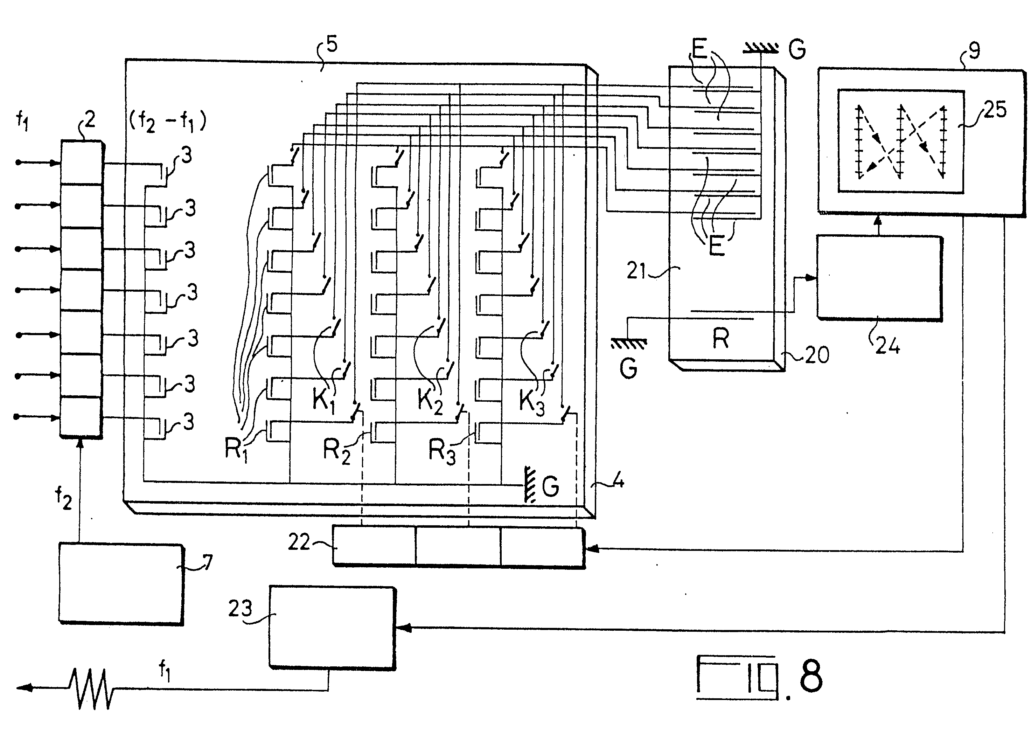

Sur la figure 6, on peut voir un mode de réalisation avantageux de la rangée de transducteurs à ondes de surface. Il s'agit d'un substrat piézoélectrique à la surface 5 duquel on a déposé des électrodes en forme de peignes interdigités. Afin de réduire la directivité des transducteurs 3, les dents des peignes sont incurvées, si bien que ceux-ci se comportent comme un alignement incurvé de sources ponc-tuelles $S_1$ à $S_N$.

Du côté de la sonde exploratrice 1 des dispositions analogues peuvent être adoptées, par exemple en creusant les faces émissives des transducteurs à onde de volume pour que ceux-ci soient moins directifs.

A titre d'exemple non-limitatif, une lentille ultrasonore telle que décrite peut recevoir des ondes de volume de fréquence 3 MHz. Avec un oscillateur local fonctionnant à 18,5 MHz, les ondes de surface émises par la rangée de transducteurs 3 ont une fréquence porteuse de 15,5 MHz. La sonde exploratrice 1 comporte par exemple 40 transducteurs juxtaposés ayant chacun une hauteur H égale à 2,5 mm. La rangée de transducteurs 3 peut être déposée sur une lame de céramique piézoélectrique, ce qui conduit à une longueur d'onde $\lambda_1$ de 140 $\mu$m. Si la sonde exploratrice 1 est couplée à des tissus où la vitesse de phase est de l'ordre de 1500 mètres/sec., la longueur d'onde $\lambda_y$ est égale à 500 $\mu$m, d'où un rapport d'homothétie de 1/3. Si la région à explorer mesure 10 cm × 15 cm, la zone de la plaquette 4 réservée à la formation de l'image ultrasonore de la coupe analysée peut mesurer 3 cm × 5 cm.

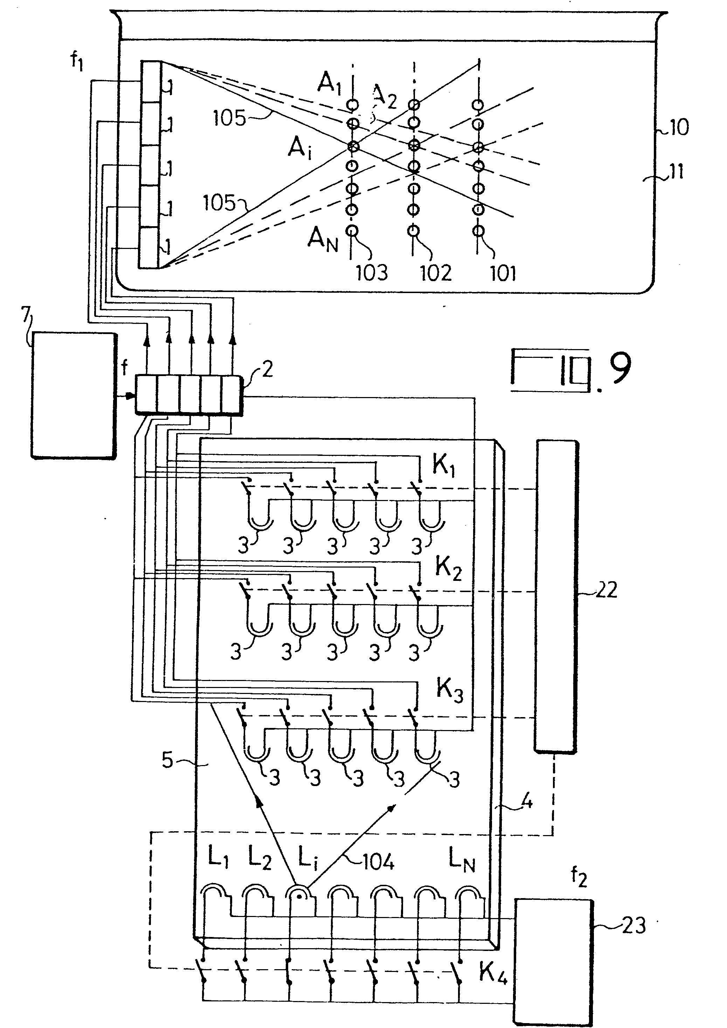

La figure 8 représente de façon plus détaillée les éléments 6, 8 et 9 qui assurent l'analyse de l'image ultrasonore 13.

Un ensemble de N circuits changeurs de fréquence 2 reçoit les signaux ultrasonores de fréquence $f_1$ qui proviennent des N transducteurs 1 de la sonde exploratrice. Les circuits changeurs de fréquence 2 reçoivent le signal d'oscillation locale de fréquence $f_2$ fourni par le générateur électrique 7. Le battement inférieur à la fréquence $f_2$—$f_1$ alimente la rangée de transducteurs 3 qui émettent les ondes de surface 5 du substrat 4. Dans la zone de formation de l'image ultrasonore, on a agencé plusieurs rangées $R_1$, $R_2$ et $R_3$ de transducteurs à ondes de surface. Ceux-ci sont avantageusement constitués par des électrodes en forme de peignes interdigités ayant une connexion de masse commune G. Des piles d'interrupteurs $K_1$, $K_2'$, $K_3$ permettent de raccorder les peignes de l'une des rangées $R_1$, $R_2$, $R_3$ à un ensemble de transducteurs E. Les transducteurs E sont également constitués par des peignes interdigités déposés à la surface 21 d'un substrat 20, par exemple en niobate de lithium. Un peigne récepteur R, également déposé sur la surface 21, reçoit les ondes de surface émises par le jeu de transducteurs E avec des retards échelonnés. Un amplificateur détecteur 24 reçoit les signaux retardés et les applique à l'entrée modulatrice du dispositif de visualisation 9. Le dispositif de visualisation 9 est par exemple constitué par un tube cathodique dont l'écran 25 est balayé verticalement à une première cadence et horizontalement à une seconde cadence plus lente. A chaque retour de balayage vertical, une impulsion reçue par un circuit de commande 22 ferme une autre pile d'interrupteurs $K_1$, $K_2$ ou $K_3$, ce qui branche une rangée $R_1$, $R_2$ ou $R_3$ de transducteurs. A chaque retour de balayage horizontal, le dispositif de visualisation fournit une impulsion au générateur d'ultra-sons 23. Ainsi est émise vers le corps à analyser une impulsion ultrasonore qui réalise son insonification. L'énergie ultrasonore captée en retour par la sonde exploratrice forme une tranche de l'image ultrasonore de la coupe à visualiser. Cette tranche s'éloigne de la rangée 3 en remontant successivement les rangées d'analyse $R_1$, $R_2$ et $R_3$. Les signaux délivrés par les rangées $R_1$, $R_2$ et $R_3$ sont distribués dans le temps par la ligne à retards échelonnés 20 et ils viennent tour à tour moduler la luminance du spot formé sur l'écran du tube cathodique. Comme le balayage de l'écran 25 est synchronisé avec la progression des ondes de surface sur les substrats 4 et 20, une image visible correspondant à l'image ultrasonore est obtenue en un temps inférieur à la période de récurrence des émissions ultrasonores.

Le dispositif de visualisation des figures 1 et 8 effectue la visualisation d'une coupe uniformément insonifiée.

Sur la figure 9, on peut voir la partie émission d'un dispositif de visualisation dans lequel l'analyse d'une coupe se fait par une insonification localisée au moyen d'un faisceau balayable angulairement et focalisable à des distances différentes de la sonde émettrice.

Le dispositif comporte une sonde exploratrice comportant une rangée de M transducteurs 1 à ultra-sons émettant des ondes de volume de fréquence $f_1$ dans un milieu de propagation 11 contenu dans la cuve 10. Dans ce cas, le corps à examiner est plongé dans la cuve à l'emplacement où la sonde exploratrice 1 fait converger les rayonnements ultrasonores. L'excitation électrique des transducteurs 1 est assurée par un jeu de M circuits changeurs de fréquence 2 qui reçoivent en provenance de l'oscillateur 7 un signal d'oscillation locale de fréquence f. Les bornes d'entrée des circuits 2 sont excitées par des signaux électriques ultrasonores de fréquence $f_2$. Ces signaux sont engendrés par des rangées de transducteurs 3 à ondes élastiques de surface qui sont agencées sur la surface 5 d'un substrat 4. Une rangée de N transducteurs à ondes élastiques de surface $L_1$, $L_2$, ... $L_i$, ... $L_N$ assure l'émission ponctuelle d'ondes de surface dirigées sous plusieurs incidences vers les rangées de transducteurs 3. L'un après l'autre, les transducteurs $L_1$, $L_2$, $L_i$, $L_N$ sont excités au moyen d'un générateur 23 délivrant des ultra-sons de fréquence $f_2$. Un jeu de commutateurs $K_4$ réalise la commutation des sources $L_1$ à $L_N$ sous la commande d'un circuit 22 qui ordonne l'exploration du corps dont on veut visualiser la coupe.

Le circuit 22 commande également plusieurs piles de commutateurs $K_1$, $K_2$, $K_3$ qui raccordent successivement les rangées de commutateurs 3 aux entrées des circuits changeurs de fréquence 2.

L'ensemble comprenant la sonde exploratrice 1, les circuits 2 et 7 et l'une des rangées de transducteurs 3 a les propriétés d'une lentille de distance focale prédéterminée. En fermant par exemple les commutateurs $K_3$, l'image des sources $L_1$ à $L_N$ vient se former selon la ligne 103 sous la forme d'images élémentaires $A_1$ à $A_N$. Pour former l'image $A_i$ de la source $L_i$ selon la ligne 103, il faut fermer l'un des interrupteurs $K_4$. Il en résulte l'émission du faisceau 104 et par voie de conséquence celle du faisceau 105.

Pour effectuer la projection du faisceau 105 en autre point de la ligne 103, on agit sur un autre interrupteur $K_4$, ce qui produit par valeurs discrètes un balayage angulaire de la ligne 103.

En ouvrant les commutateurs $K_3$ et en fer-

mant les commutateurs $K_2$ ou $K_1$, on peut passer de l'exploration de la ligne 103 à celle des lignes 102 ou 101. On réalise ainsi un balayage en éloignement suivant trois lignes de focalisation.

Les moyens représentés sur la figure 9 permettent d'explorer point par point la coupe d'un corps au moyen d'un faisceau convergent d'ultra-sons. Pour visualiser la coupe, il faut capter les ultra-sons réémis par le corps en chaque point ayant été sélectivement insonifié. Le capteur peut être constitué par exemple, par un élément transducteur non directif capable de convertir les ondes de volume en un signal modulant le faisceau inscripteur du dispositif de visualisation. Dans ce cas, il faut synchroniser la commande des commutateurs $K_1$, $K_2$, $K_3$ et $K_4$ avec le balayage d'un écran de visualisation.

Dans ce qui précède, on a considéré le cas d'une lentille ultrasonore permettant d'obtenir une image réelle située à distance finie.

Cependant, il est possible d'envisager la projection d'une image virtuelle, ce qui conduit à ne pas changer le signe du déphasage des signaux lors du changement de fréquence.

Pour illustrer ce mode de fonctionnement, on peut voir sur la figure 10 une sonde exploratrice 1 associée à des éléments à ondes de surface dont l'agencement sur la face 5 est tel que l'on obtienne un faisceau 111 sensiblement parallèle. En commutant les sources $L_1$ à $L_N$ par le truchement des interrupteurs $K_4$, le rayonnement peut changer de direction tout en restant parallèle. Sur la figure 10, le faisceau 111 est obtenu lorsque la source émettrice est celle située au milieu de la rangée $L_1$, $L_N$; le faisceau 110 est obtenu lorsque c'est la source extrême $L_N$ qui émet les ultra-sons. La rangée de transducteurs 3 est incurvée selon un arc de circonférence dont le centre est situé au milieu de la rangée $L_1$ à $L_N$.

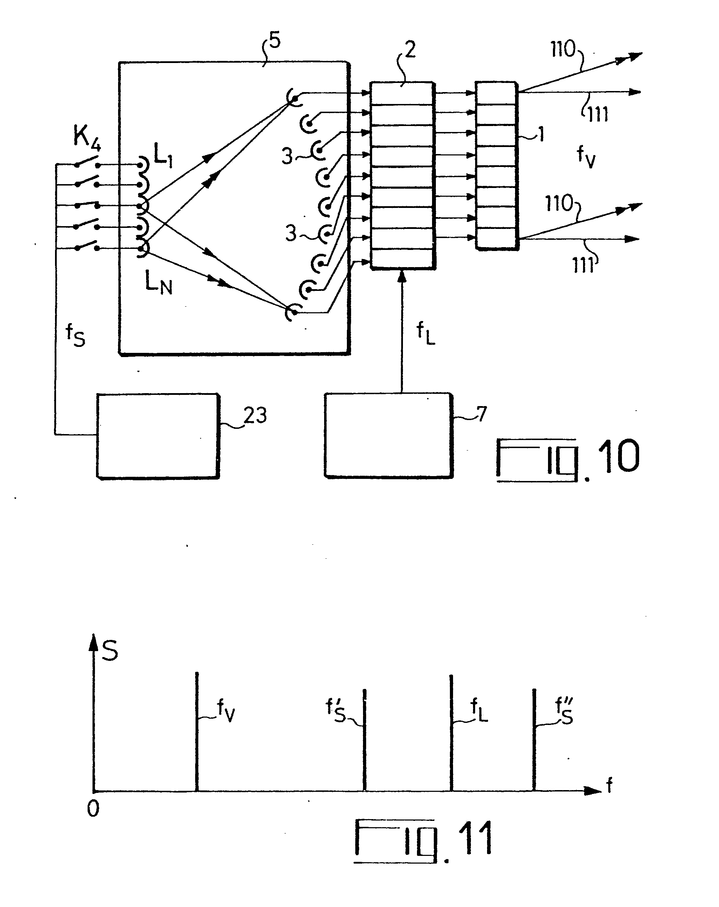

En ce qui concerne le changement de fréquence, on a représenté sur la figure 11 les agencements pouvant être utilisés. La fréquence des ondes de volume est notée $f_V$; celle de l'oscillateur local $f_L$ et les deux battements possibles caractérisant les ondes de surface $f'_S$ et $f''_S$. Lorsqu'on adopte le battement inférieur $f'_S$, on observe une inversion du signe du déphasage ce qui conduit à la projection d'une image réelle au moyen d'ultra-sons focalisés à distance finie. Au contraire, avec le battement supérieur $f''_S$, on conserve le signe du déphasage, ce qui conduit au type de fonctionnement illustré sur la figure 10. Bien entendu, le fonctionnement avec conservation du signe du déphasage est intéressant dans le cas de la projection d'un faisceau parallèle. Si le faisceau rayonné est divergent, il faut prévoir une lentille auxiliaire convergente en amont de la sonde pour obtenir une image réelle.

**Revendications**

1. Dispositif de visualisation par ultra-sons d'une coupe mince d'un corps, le dispositif comprenant des moyens d'insonification composés d'un générateur électrique d'ultra-sons et d'au moins un transducteur électromécanique et des moyens de visualisation, ledit dispositif comprenant en outre une lentille untrasonore à changement de fréquence composée d'une première rangée de N transducteurs électromécaniques à ondes de volume formant une sonde exploratrice, d'un ensemble de N circuits électriques changeurs de fréquence reliés à un oscillateur local commun et d'une seconde rangée de N transducteurs électomécaniques; les première et seconde rangées ayant leurs transducteurs homologues interconnectés deux à deux par les circuits électriques changeurs de fréquence de manière à constituer un faisceau de transmission à N voies dans lesquelles circulent N signaux électriques; la fréquence des ondes de volume étant égale à l'écart entre la fréquence des signaux parcourant les transducteurs de ladite seconde rangée et celle du signal produit par l'oscillateur local; la seconde rangée de N transducteurs étant associée à au moins une troisième rangée de transducteurs électromécaniques dont l'image produite par ladite lentille ultrasonore assure l'analyse dudit corps par un échange d'énergie ultrasonore entre la troisieme rangée et les moyens de visualisation, caractérisé en ce que les transducteurs desdites seconde et troisième rangées sont des transducteurs à ondes élastiques de surface agencés à la surface d'un substrat; ladite lentille ultrasonore conjuguant ladite coupe mince et ladite surface; ladite coupe mince et ladite première rangée étant coplanaires.

2. Dispositif suivant la revendication 1, caractérisé en ce que le générateur électrique d'ultra-sons excite ledit transducteur électro-mécanique afin d'émettre un faisceau d'ultra-sons qui insonifie la coupe à visualiser; la sonde exploratrice recueillant les rayonnements ultra-sonores émergeant du corps irradié; les transducteurs de la troisième rangée délivrant des signaux électriques exploités par les moyens de visualisation.

3. Dispositif suivant la revendication 2, caractérisé en ce que les moyens de visualisation comprennent un moyen inscripteur balayant dans deux directions une plage de visualisation; le moyen inscripteur étant commandé par les signaux électriques après que ceux-ci aient été distribués dans le temps par un moyen de transmission à retards échelonnés.

4. Dispositif suivant le revendication 3, caractérisé en ce que le moyen de transmission à retards échelonnée est une ligne à retard à ondes de surface dont les transducteurs d'émission sont excités par les signaux électriques et dont le transducteur de réception commande le moyen inscripteur.

5. Dispositif suivant l'une quelconque des revendications 2 à 4, caractérisé en ce que la surface du substrat porte plusieurs troisièmes rangées de transducteurs électromécaniques à ondes de surface; des moyens commutateurs reliant successivement chacune des troisièmes rangées aux moyens de visualisation.

6. Dispositif suivant la revendication 1, caractérisé en ce que le générateur électrique d'ultrasons alimente successivement les transducteurs composant la troisième rangée, afin que la sonde exploratrice projette un faisceau d'ultra-sons focalisé balayant la coupe angulairement; les rayonnements ultrasonores émergeant du corps insonifié par la sonde étant captés par un transducteur électromécanique relié aux moyens de visualisation.

7. Dispositif suivant la revendication 6, caractérisé en ce que le générateur électrique d'ultrasons alimente successivement plusieurs troisièmes rangées de transducteurs, afin d'explorer la coupe en éloignement par une modification de la distance de focalisation du faisceau d'ultra-sons projeté par la sonde exploratrice.

8. Dispositif suivant l'une quelconque des revendications 1 à 7, caractérisé en ce que la configuration de la seconde rangée est homothétique de celle de la première rangée dans le rapport des longeurs d'ondes respectives, des ondes de surface propagées à la surface du substrat et des ondes de volume se propageant entre la sonde et le corps.

9. Dispositif suivant l'une quelconque des revendications 1 à 7, caractérisé en ce que l'une au moins des première et seconde rangées est rectiligne.

10. Dispositif suivant l'une quelconque des revendications 1 à 7, caractérisé en ce que l'une au moins des première et seconde rangées est incurvée.

11. Dispositif suivant l'une quelconque des revendications 8 à 10, caractérisé en ce que les N transducteurs électromécaniques à ondes de surface sont des transducteurs en forme de peignes interdigités.

12. Dispositif suivant la revendication 11, caractérisé en ce que les dents des peignes sont rectilignes.

13. Dispositif suivant la revendication 11, caractérisé en ce que les dents des peignes sont incurvées.

14. Dispositif suivant l'une quelconque des revendications 1 à 13, caractérisé en ce que les transducteurs de la troisième rangée sont des transducteurs en peignes interdigités.

15. Dispositif suivant la revendication 4, caractérisé en ce que les transducteurs de la ligne à retard sont des transducteurs en peignes interdigités.

16. Dispositif suivant l'une quelconque des revendications précédentes, caractérisé en ce que les circuits changeurs de fréquence inversent le signe de la phase des signaux incidents.

17. Dispositif suivant l'une quelconque des revendications précédentes, caractérisé en ce que les circuits changeurs de fréquence conservent le signe de la phase des signaux incidents.

**Patentansprüche**

1. Vorrichtung zur Ultraschall-Sichtdarstellung eines dünnen Abschnittes eines Körpers, wobei die Vorrichtung Beschallungsmittel, die aus einem elektrischen Ultraschallgenerator und wenigstens einem elektromechanischen Wandler zusammengesetzt sind, und Sichtdarstellungsmittel umfaßt, und wobei die Vorrichtung ferner eine Frequenzwandler-Ultraschallinse umfaßt, die zusammengesetzt ist aus einer ersten Reihe von N elektromechanischen Volumenwellen-Wandlern, die eine Erforschungssonde bilden, aus einer Gruppe von N elektrischen Frequenzwandlerschaltungen, die mit einem gemeinsamen Lokaloszillator verbunden sind, und aus einer zweiten Reihe von N elektromechanischen Wandlern; wobei die einander entsprechenden Wandler der ersten und der zweiten Reihe jeweils zu zweit durch die elektrischen Frequenzwandlerschaltungen derart miteinander verbunden sind, daß ein Übertragungsbündel mit N Kanälen gebildet wird, in denen N elektrische Signale laufen; wobei die Frequenz der Volumenwellen gleich dem Frequenzabstand zwischen den die Wandler der zweiten Reihe durchlaufenden Signalen und der Frequenz des von dem Lokaloszillator erzeugten Signals ist; wobei die zweite Reihe von N Wandlern wenigstens einer dritten Reihe von elektromechanischen Wandlern zugeordnet ist, deren durch die Ultraschallinse erzeugtes Bild die Analyse des Körpers durch einen Ultraschallenergieaustausch zwischen der dritten Reihe und den Sichtdarstellungsmitteln gewährleistet, dadurch gekennzeichnet, daß die Wandler der zweiten und der dritten Reihe Wandler für elastische Oberflächenwellen sind, die an der Oberfläche eines Substrates angeordnet sind; wobei die Ultraschallinse den dünnen Abschnitt und die genannte Oberfläche miteinander konjugiert; wobei der dünne Abschnitt und die erste Reihe koplanar sind.

2. Vorrichtung nach Anspruch 1, dadurch gekennzeichnet, daß der elektrische Ultraschallgenerator den elektromechanischen Wandler anregt, damit dieser ein Ultraschallbündel aussendet, das den darzustellenden Abschnitt beschallt, wobei die Erforschungssonde die von dem bestrahlten Körper ausgehenden Ultraschallstrahlen empfängt; wobei die Wandler der dritten Reihe elektrische Signale abgeben, die von den Sichtdarstellungsmitteln ausgenutzt werden.

3. Vorrichtung nach Anspruch 2, dadurch gekennzeichnet, daß die Sichtdarstellungsmittel eine Aufzeichnungseinrichtung umfassen, die in zwei Richtungen einer Darstellungsfläche ablenkt; wobei die Aufzeichnungseinrichtung durch die elektrischen Signale gesteuert wird, nachdem diese durch eine Übertragungseinrichtung mit abgestuften Verzögerungen zeitlich verteilt worden sind.

4. Vorrichtung nach Anspruch 3, dadurch gekennzeichnet, daß die Einrichtung zur Übertragung mit abgestuften Verzögerungen eine Oberflächenwellen-Verzögerungsleitung ist, deren Sendewandler von den elektrischen Signalen erregt werden und deren Empfangswandler die Aufzeichnungseinrichtung steuert.

5. Vorrichtung nach einem der Ansprüche 2 bis 4, dadurch gekennzeichnet, daß die Oberfläche des Substrates mehrere dritte Reihen von elektromechanischen Oberflächenwellen-Wandlern trägt; wobei Schalteinrichtungen nacheinander jede der dritten Reihen mit den Sichtdarstellungsmitteln verbinden.

6. Vorrichtung nach Anspruch 1, dadurch gekennzeichnet, daß der elektrische Ultraschallgenerator nacheinander die die dritte Reihe bildenden Wandler speist, damit die Erforschungssonde ein fokalisiertes Ultraschallbündel projiziert, welches über den Abschnitt verschwenkt wird; wobei die von dem durch die Sonde beschallten Körper ausgehende Ultraschallstrahlung von einem elektromechanischen Wandler aufgefangen wird, der mit den Sichtdarstellungsmitteln verbunden ist.

7. Vorrichtung nach Anspruch 6, dadurch gekennzeichnet, daß der elektrische Ultraschallgenerator nacheinander mehrere dritte Reihen von Wandlern speist, um den Abschnitt entfernungsmäßig durch eine Änderung des Fokussierabstandes des von der Erforschungssonde projizierten Ultraschallbündels zu erforschen.

8. Vorrichtung nach einem der Ansprüche 1 bis 7, dadurch gekennzeichnet, daß die Ausgestaltung der zweiten Reihe zu derjenigen der ersten Reihe homothetisch ist im Verhältnis der entsprechenden Wellenlängen der sich an der Substratoberfläche ausbreitenden Oberflächenwellen und der Volumenwellen, die sich zwischen der Sonde und dem Körper ausbreiten.

9. Vorrichtung nach einem der Ansprüche 1 bis 7, dadurch gekennzeichnet, daß wenigstens eine der ersten und zweiten Reihen geradlinig ist.

10. Vorrichtung nach einem der Ansprüche 1 bis 7, dadurch gekennzeichnet, daß wenigstens eine der ersten und zweiten Reihen gekrümmt ist.

11. Vorrichtung nach einem der Ansprüche 8 bis 10, dadurch gekennzeichnet, daß die N elektromechanischen Oberflächenwellenwandler Wandler in Form von verschachtelten Kämmen sind.

12. Vorrichtung nach Anspruch 11, dadurch gekennzeichnet, daß die Zinken der Kämme geradlinig sind.

13. Vorrichtung nach Anspruch 11, dadurch gekennzeichnet, daß die Zinken der Kämme gekrümmt sind.

14. Vorrichtung nach einem der Ansprüche 1 bis 13, dadurch gekennzeichnet, daß die Wandler der dritten Reihe Wandler aus verschachtelten Kämmen sind.

15. Vorrichtung nach Anspruch 4, dadurch gekennzeichnet, daß die Wandler der Verzögerungsleitung Wandler aus verschachtelten Kämmen sind.

16. Vorrichtung nach einem der vorstehenden Ansprüche, dadurch gekennzeichnet, daß die Frequenzwandlerschaltungen das Phasenvorzeichen der eintreffenden Signale umkehren.

17. Vorrichtung nach einem der vorstehenden Ansprüche, dadurch gekennzeichnet, daß die Frequenzwandlerschaltungen das Vorzeichen der Phase der eintreffenden Signale bewahren.

**Claims**

1. Device for ultrasonic visualization of a thin section of a body, the device comprising acoustic excitation means composed of an electric ultrasonic generator and at least one electromechanical transducer, and visualization means, said device further comprising an ultrasonic frequency modification lens composed of a first row of N electromechanical volume wave transducers forming an exploring probe, a group of N electric frequency modification circuits connected to a common local oscillator, and a second row of N electromechanical transducers; the first and second rows having their corresponding transducers interconnected two by two through the electric frequency modification circuits in a manner to form a transmission beam having N paths in which N electric signals are circulating; the frequency of the volume waves being equal to the frequency difference between the signals traversing the transducers of the second row and the frequency of the signal produced by the local oscillator; the second row of N transducers being associated with at least one third row of electromechanical transducers of which the image produced by said ultrasonic lens assures the analysis of said body by an exchange of ultrasonic energy between the third row and the visualization means, characterized in that the transducers of said second and third rows are elastic surface wave transducers arranged on the surface of a substrate; said ultrasonic lens conjugating said thin section and said surface; said thin section and said first row being coplanar.

2. Device in accordance with claim 1, characterized in that the electric ultrasonic generator excites said electromechanical transducer in order to emit an ultrasonic beam providing acoustic excitation of the section to be visualized; the exploring probe collecting the ultrasonic radiation emerging from the excited body; the transducers of the third row delivering electric signals used by the visualization means.

3. Device in accordance with claim 2, characterized in that the visualization means comprise inscription means scanning a visualization range in two directions; the inscription means being controlled by the electric signals after having temporally distributed the latter by graduated delay transmission means.

4. Device in accordance with claim 3, characterized in that the graduated delay transmission means is a surface wave delay line the transmission transducers of which are excited by the electric signals and the reception transducer of which controls the inscription means.

5. Device in accordance with any of claims 2 to 4, characterized in that the substrate surface bears a plurality of third rows of electromechanical surface wave transducers; switching means successively connecting each of the second rows to the visualization means.

6. Device in accordance with claim 1, characterized in that the electric ultrasonic generator successively supplies the transducers composing the third row, in order that the exploring probe will project a focused ultrasonic beam angularly scanning the section; the ultrasonic radiation emerging from the body excited by the probe being received by an electromechanical transducer connected to the visualization means.

7. Device in accordance with claim 6, characterized in that the electric ultrasonic generator successively supplies a plurality of third transducer rows, in order to explore the section in range by a modification of the focusing distance of the ultrasonic beam projected by the exploring probe.

8. Device in accordance with any of claims 1 to 7, characterized in that the arrangement of the second row is homothetic to that of the first row in the ratio of the respective wave lengths of the surface waves propagating in the surface of the substrate and the volume waves propagating between the probe and the body.

9. Device in accordance with any of claims 1 to 7, characterized in that at least one of the first and second rows is rectilinear.

10. Device in accordance with any of claims 1 to 7, characterized in that at least one of the first and second rows is curved.

11. Device in accordance with any of claims 8 to 10, characterized in that the N electromechanical surface wave transducers are transducers having the form of interdigitated combs.

12. Device in accordance with claim 11, characterized in that the tines of the combs are rectilinear.

13. Device in accordance with claim 11, characterized in that the tines of the combs are curved.

14. Device in accordance with any of claims 1 to 13, characterized in that the transducers of the third row are transducers in the form of interdigitated combs.

15. Device in accordance with claim 4, characterized in that the transducers of the delay line are transducers in the form of interdigitated combs.

16. Device in accordance with any of the preceding claims, characterized in that the frequency modification circuits inverse the sign of the phase of the incident signal.

17. Device in accordance with any of the preceding claims, characterized in that the frequency modification circuits maintain the sign of the phase of the incident signals.

FIG. 1

Fig. 2

Fig. 3

Fig. 4

FIG.5

FIG.6

FIG.7

$f_1$

2

$(f_2 - f_1)$

3
3
3
3
3
3
3

$f_2$

7

$f_1$

23

$K_1$ $K_2$ $K_3$

$R_1$ $R_2$ $R_3$

G

4

22

5

E

G

21

G

R

20

24

E

9

25

0001532

$\square\square.8$

Fig.9

$K_4$

$L_1$

$3$

$3$

$L_N$

$5$

$2$

$110$

$111$

$1$

$f_V$

$110$

$111$

$f_L$

$f_S$

$23$

$7$

Fig. 10

$S$

$f_V$

$f_S'$

$f_L$

$f_S''$

$0$

$f$

Fig. 11